Europäisches Patentamt

(19) European Patent Office

Office européen des brevets

(11) **EP 0 910 147 A2**

(12) **EUROPEAN PATENT APPLICATION**

(43) Date of publication:
21.04.1999 Bulletin 1999/16

(51) Int. Cl.$^6$: **H02G 7/20**

(21) Application number: 98203414.2

(22) Date of filing: 13.10.1998

(84) Designated Contracting States:
AT BE CH CY DE DK ES FI FR GB GR IE IT LI LU
MC NL PT SE
Designated Extension States:
AL LT LV MK RO SI

(30) Priority: 15.10.1997 IT MI972335

(71) Applicant: **ABB Research Ltd.**
8050 Zürich (CH)

(72) Inventors:
• **Giampieretti, Roberto**
20141 Milano (IT)

• **Bertazzi, Arnaldo**
20052 Monza (MI) (IT)
• **Elli, Enrico**
20050 Verano Brianza (MI) (IT)
• **Catenacci, Andrea**
20123 Milano (IT)

(74) Representative:
**Giavarini, Francesco**
**ABB Ricerca S.p.A.**
**Viale Edison, 50**
**20099 Sesto San Giovanni (MI) (IT)**

(54) **Pole for overhead electricity transmission lines**

(57) The present invention relates to a pole for overhead electricity transmission lines comprising a pole head of insulating material connected to a supporting structure. Said pole head supports electrical line conductors and a guard conductor positioned above.

The distinctive feature of the invention is constituted by the fact that it comprises an earth conductor that is electrically connected to the guard conductor and passes externally to said pole head.

EP 0 910 147 A2

## Description

The present invention relates to a pole for overhead electricity transmission lines. As it is known, so-called compact pylons, developed to reduce the width of right-of-way and to reduce the visual impact of the line in relation to the surrounding environment, are increasingly being used for the implementation of overhead electricity transmission lines.

In order to achieve this aim, compact pylons have the function of combining the structural supporting function and the insulating function in a single component, that is the insulated pole head.

The pole head is, generally speaking, made using a fibreglass-reinforced polymeric tubular element that supports the conductors and so-called guard wire using extremely short arms.

This leads to a significant reduction in the transverse width of the pole, above all when compared to the width of traditional lattice pylons.

The pole head is normally supported by a base or supporting element, made of metallic material.

In these embodiments, a relevant task is to obtain the earth connection of the guard wire.

In present solutions, earth connection is either omitted or forced to pass inside the pole head encountering several mechanical and electrical problems.

Main task of the invention is to provide a pole for overhead electricity transmission lines in which earthing the guard wire is performed with significant functional and constructional advantages.

As part of the above task one particular aim of the invention is to provide a pole for overhead electricity transmission lines, in which an earth conductor is connected to the guard wire without consequently having to operate on or in some way modify the overall characteristics of the pole.

Another aim of the present invention is to provide a pole for overhead electricity transmission lines that is, as a result of its distinctive constructional characteristics, very reliable and safe in use.

A further but not the last aim of the present invention is to provide a pole for overhead electricity transmission lines that can be easily obtained using common commercially available elements and materials and that is, moreover, competitive from an economical point of view.

The above task as well as the above-mentioned aims and others, that shall emerge more clearly hereinafter, are achieved by a pole for electricity transmission lines comprising a pole head of insulating material connected to a supporting structure, said pole head supporting electrical line conductors and a guard conductor positioned above. The pole according to the invention is characterised by the fact that it comprises an earth conductor that is electrically connected to said guard conductor and passes externally to said pole head.

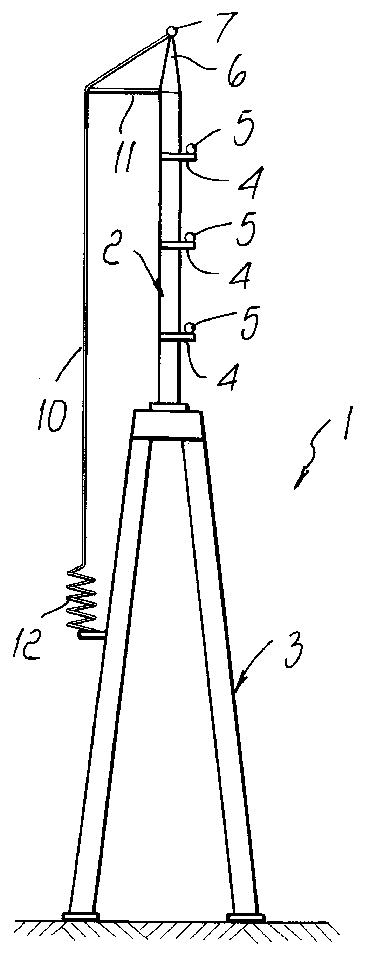

Further characteristics and advantages shall emerge more clearly from the description of a preferred but not exclusive embodiment of a pole for overhead electricity transmission lines, illustrated, purely by way of example and without limitation, with the aid of the attached drawings, in which figure 1 is a diagrammatic representation of a pole for overhead electricity transmission lines shown in elevation.

With reference to figure 1, the pole for overhead electricity transmission lines as in the invention, which is indicated overall by reference number 1, comprises a pole head 2 that is in itself made, in a known manner, with a fibreglass-reinforced polymeric tubular element and it is supported by a supporting structure 3 that is advantageously obtained from a metal framework electrically conductive.

The line conductors 5 are supported on the pole head using short arms 4, while a support 6 is provided above for the connection of a guard wire 7.

The distinctive feature of the invention is constituted by the fact that an earth conductor 10 electrically connected to the guard conductor 7 and extending externally to the pole head 2, is provided.

More particularly, the earth wire 10 is connected across the guard wire 7 and the supporting structure 3.

In order to keep the earth wire 10 in the correct position a tensioner arm 11 is provided forcing the earth conductor 10 to follow a development that it is substantially parallel to the pole head 2.

To keep the mechanical tension on the earth conductor constant in order to avoid uncontrolled eccentric pressure of the pole head and movements of the conductor, a spring 12 is placed at the end of the earth conductor 10; said spring 12 is connected in series with the conductor and enables even high mechanical tensions to be discharged.

Advantageously, the stiffness of the spring has to be significantly lower than the stiffness of the conductor.

Adopting the arrangement of a spring with low stiffness enables the spring conductor system to have a stiffness that equates approximately the stiffness of the spring, such that if the stiffness of the spring is fairly low the mechanical tension on the earth wire undergoes small changes even when high tensions in the spring wire system are present.

It is advantageously possible to use a spring with a non-linear elastic constant in order to obtain a decrease of the tangential stiffness when an increase of the extension of the spring occurs, so that ensuring changes in tension even smaller.

To suggest a model, it is possible to state that, placing the spring in series with the conductor, one obtains a total length change $u = u_s + u_W = F/K_s + F/K_W$ where $u_s$ and $u_W$ are the changes in length of the spring and the conductor respectively and F is the common tension value while

$K_s$ and $K_W$ are the corresponding stiffness coefficients.

The total stiffness K is:
$$K = F/u = (1/K_s + 1/K_W)^{-1} = K_s/(1 + K_s/K_W)$$

If the spring is much more flexible than the conductor one will have $K_s/K_W \ll 1$ such that $K = K_s$ and $u = u_s$, which is to say that the stiffness and change in length of the system are substantially the stiffness and change in length of the spring.

This means that the change in tension F is significantly reduced and is not felt on the pole head causing damage and the like.

It can therefore be seen that which has been set forth that the invention achieves its set aims. In particular it should be emphasised that the fact of having provided an outside earth wire significantly simplifies the installation phases, making it possible to connect the guard conductor to earth easily without operating on the structure of the pole.

The effectiveness of the earthing is, furthermore, guaranteed by the fact that the earth conductor is interconnected with the pole's metal support, consequently also reducing the length of the earth wire.

The invention as conceived is capable of numerous modifications and variants that are all within the inventive concept.

Moreover, all the details may be substituted by other technically equivalent elements.

In practice, the materials used as well as the contingent dimensions and shapes can be varied without limitation to suit requirements.

## Claims

1. Pole for overhead electricity transmission lines comprising a pole head of insulating material connected to a supporting structure, said pole head supporting electrical line conductors and a guard conductor positioned above, characterised by the fact that it comprises an earth conductor electrically connected to said guard conductor and passing externally to said pole head.

2. Pole for overhead electricity lines as in the previous claim characterised by the fact that it includes an elastic element at the end of said earth conductor.

3. Pole for overhead electricity lines as in the previous claims characterised by the fact that said earth conductor is electrically connected across said guard conductor and said supporting structure.

4. Pole for overhead electricity lines as in claim 3 characterized by the fact that said supporting structure is made of metallic material.

5. Pole for overhead lines as in one or more of the claims from 2 to 4 characterised by the fact that said elastic element is a spring connected in series with said earth conductor.

6. Pole for overhead lines as in claim 5 characterised by the fact that said spring connected in series with said earth conductor has a non-linear stiffness characteristic with a tangential stiffness that decreases with extension.